# FASCICULE DE BREVET EUROPEEN

(11) **EP 3 033 812 B1**
(45) Date de publication et mention de la délivrance du brevet: **21.04.2021**
(21) Numéro de dépôt: 14741312.4
(22) Date de dépôt: 18.07.2014
(51) Int. Cl.: H01S 3/10, H01S 3/23, H01S 3/139, G01N 21/3504, G01N 21/39, G01S 7/484, G01S 17/95, H01S 3/083, H01S 3/106, H01S 3/16

(54) **EMETTEUR LASER A IMPULSIONS MULTIFREQUENCES, ET LIDAR A ABSORPTION DIFFERENTIELLE METTANT EN OEUVRE UN TEL EMETTEUR LASER**
GEPULSTER MULTIFREQUENZLASEREMITTER UND DIFFERENZABSORPTIONS-LIDAR MIT SOLCH EINEM LASEREMITTER
MULTIFREQUENCY PULSED LASER EMITTER AND DIFFERENTIAL ABSORPTION LIDAR EMPLOYING SUCH A LASER EMITTER

(30) Priorité: 12.08.2013 FR 1357958
(43) Date de publication de la demande: 22.06.2016
(73) Titulaire: CNRS (Centre National de la Recherche Scientifique), 75016 Paris Cedex 16 (FR); Ecole Polytechnique, 91128 Palaiseau Cedex (FR)
(72) Inventeur: GIBERT, Fabien, F-91120 Palaiseau (FR); EDOUART, Dimitri, F-92160 Anthony (FR); CENAC, Claire, F-91400 Orsay (FR); LE MOUNIER, Florian, F-94000 CRETEIL (FR)
(74) Mandataire: Gevers & Orès
(86) Numéro de dépôt international: PCT/EP2014/065563
(87) Numéro de publication internationale: WO 2015/022148

(56) Documents cités:
- KLAUS ERTEL ET AL: "Injection-seeded pulsed Ti:sapphire laser with novel stabilization scheme and capability of dual-wavelength operation", APPLIED OPTICS, vol. 44, no. 24, 20 août 2005 (2005-08-20) , page 5120, XP055107610, ISSN: 0003-6935, DOI: 10.1364/AO.44.005120
- GIBERT F ET AL: "TWO-MICROMETER HETERODYNE DIFFERENTIAL ABSORPTION LIDAR MEASUREMENTS OF THE ATMOSPHERE CO2 MIXING RATIO IN THE BOUNDARY LAYER", APPLIED OPTICS, OPTICAL SOCIETY OF AMERICA, WASHINGTON, DC; US, vol. 45, no. 18, 20 juin 2006 (2006-06-20) , pages 4448-4458, XP001243228, ISSN: 0003-6935, DOI: 10.1364/AO.45.004448 cité dans la demande
- Fabien Gibert ET AL: "Advanced 2- m Ho :YLF transmitter and coherent DIAL for atmospheric CO 2 profiling in the boundary layer", , 17 juin 2013 (2013-06-17), XP055106819, Extrait de l'Internet: URL:http://www.tsc.upc.edu/clrc/wp-content /uploads/Manuscripts/clrc2013_submission_2 4.pdf [extrait le 2014-03-11]
- CHRISTIAN BRANDT ET AL: "In-band fiber-laser-pumped Er:YVO4 laser emitting around 1.6 ìm", OPTICS LETTERS, OPTICAL SOCIETY OF AMERICA, US, vol. 36, no. 7, 25 mars 2011 (2011-03-25), pages 1188-1190, XP001561609, ISSN: 0146-9592, DOI: 10.1364/OL.36.001188 [extrait le 2011-03-25]
- KENJI NUMATA ET AL: "Frequency stabilization of distributed-feedback laser diodes at 1572 nm for lidar measurements of atmospheric carbon dioxide", APPLIED OPTICS, OPTICAL SOCIETY OF AMERICA, WASHINGTON, DC; US, vol. 50, no. 7, 28 février 2011 (2011-02-28), pages 1047-1056, XP001560742, ISSN: 0003-6935, DOI: 10.1364/AO.50.001047 [extrait le 2011-02-28] cité dans la demande

## Description

### 1. Domaine de l'invention

La présente invention concerne un émetteur d'impulsions lasers, encore appelé laser à impulsions, pouvant être mis en œuvre dans un lidar, et plus particulièrement dans un lidar à absorption différentielle.

L'invention concerne également un lidar mettant en œuvre un tel laser à impulsions.

### 2. Etat de l'art

### 2.1. Lidar

Le terme « lidar » est l'acronyme de l'expression anglaise « *light détection and ranging* », qui se traduit en français par « détection et télémétrie par la lumière ». Il désigne un capteur actif utilisant comme source émettrice un laser, qui est utilisé pour la mesure des distances, la détection et, éventuellement, la localisation de constituants des milieux rencontrés. Selon cette technique, une impulsion laser est émise dans la direction d'un objet, d'une surface ou d'un constituant à localiser. La distance de cet objet, de cette surface ou de ce constituant est donnée par la mesure du délai entre l'émission de l'impulsion lumineuse et la détection du signal réfléchi ou diffusé par l'objet, la surface ou le constituant.

Un lidar peut notamment être utilisé pour détecter la concentration et la localisation des différents composants de l'atmosphère. On peut dans ce cas utiliser un lidar à absorption différentielle, encore appelée DiAL (acronyme de l'expression anglaise *« Differential Absorption Lidar* » signifiant « lidar à absorption différentielle »), pour détecter un composant gazeux. Un tel lidar met en œuvre des impulsions laser de deux longueurs d'ondes distinctes.

Ces deux longueurs d'onde sont choisies de telle sorte qu'une première de ces longueurs d'onde, appelée longueur d'onde absorbée, corresponde à une longueur d'onde fortement absorbée dans le spectre d'absorption du composant gazeux que l'on cherche à détecter. L'autre longueur d'onde, appelée longueur d'onde de référence, est choisie dans une région spectrale sans absorption, ou d'absorption négligeable, du spectre d'absorption du composant gazeux.

Pour chacune de ces deux longueurs d'onde, la lumière réfléchie ou diffusée par l'atmosphère est collectée par un télescope et une optique adaptée et est mesurée par un photodétecteur pour former un signal lidar. La comparaison des signaux lidar pour la longueur d'onde absorbée et la longueur d'onde de référence permet de déterminer la localisation et la concentration du composant gazeux recherché.

Un lidar à absorption différentielle est un équipement comprenant notamment :
- des moyens d'émission des impulsions lasers d'au moins deux longueurs d'ondes distinctes ;
- un système opto-mécanique pour diriger les impulsions lasers dans la direction souhaitée ;
- un système optique de réception associé à un photo-détecteur pour recevoir la lumière diffusée et la convertir en un signal lidar pouvant être analysé ultérieurement.

### 2.2. Laser à impulsions multifréquences

Pour rendre plus fiables les mesures effectuées par le lidar à absorption différentielle, il est important que les impulsions lasers de longueur d'onde distinctes présentent le plus possible de caractéristiques communes. Pour cela, un lidar à absorption différentielle peut comporter un laser à impulsions multifréquences, c'est-à-dire un laser capable d'émettre, de façon alternée, des impulsions lumineuses de longueurs d'onde différente. L'usage d'un seul laser confère aux impulsions les mêmes propriétés spatiales (alignement, divergence, modes spatiaux...). Par ailleurs, cette solution présente l'avantage de ne nécessiter qu'un seul laser à impulsions, ce qui est avantageux en terme de coût, de volume, etc.

Un tel laser est, de façon classique, dédié à la détection et à la mesure d'un composant gazeux donné. Ainsi, l'une de ses longueurs d'onde d'émission, appelée longueur d'onde absorbée, correspond à un maximum d'absorption du spectre d'absorption de ce composant gazeux. L'autre longueur d'onde, appelée longueur d'onde de référence, est choisie dans une région spectrale sans absorption, ou d'absorption négligeable, du spectre d'absorption du composant gazeux, afin que les impulsions émises à cette longueur d'onde ne soient pas absorbées par le composant gazeux.

Les impulsions lasers utilisées pour un lidar à absorption différentielle doivent présenter une fréquence, ou une longueur d'onde, très précise. Il est en conséquence important, et dans certains cas indispensable, que chacune de ces impulsions soit monomode longitudinalement, c'est-à-dire qu'elle soit amplifiée par un seul des modes oscillants, ou des modes propres, de la cavité laser. Une telle impulsion présente ainsi une très bonne finesse spectrale, qui correspond à la finesse spectrale du mode oscillant.

Les lasers utilisés pour réaliser un lidar à absorption différentielle doivent donc être à la fois multifréquences, c'est-à-dire capable d'émettre successivement des impulsions de longueurs d'onde différentes, et monomodes, c'est-à-dire que chacune des impulsions émises est monomode longitudinalement. Il est également souhaitable que les impulsions émises soient monomodes spatialement, pour une meilleure cohérence du laser et pour limiter sa divergence, et que le laser soit polarisé linéairement, pour une meilleure séparation et protection du module de réception d'un lidar.

Les principaux gaz à effet de serre (H₂O, CO₂, CH₄...) présentent des raies d'absorption dans le proche infrarouge, autour de 1500 à 2000 nm. Pour réaliser une surveillance atmosphérique efficace, il est donc nécessaire de disposer d'émetteurs lasers pulsés monomodes multifréquences dans le proche infrarouge. L'énergie par impulsion doit être de l'ordre de la dizaine de millijoules pour obtenir un signal lidar atmosphérique exploitable sur une distance de quelques kilomètres. Ces émetteurs lasers doivent être de forte puissance (supérieure à quelques watts) et offrir une bonne qualité spatiale de faisceau et de grandes stabilités spectrale et du niveau d'énergie par impulsion, pour obtenir la précision recherchée sur une mesure de concentration de gaz, tout en délivrant au minimum deux longueurs d'ondes pour mettre en œuvre la méthode lidar absorption différentielle.

### 2.3. Solutions existantes

Plusieurs types de lasers à impulsions sont d'ores et déjà utilisés pour réaliser des lasers multifréquences, notamment celui qui est décrit par l'article « Two-micrometer heterodyne differential absorption lidar measurements of the atmospheric CO2 mixing ratio in the boundary layer » Gibert & al., Applied Optics, Vol. 45, Issue 18, pp. 4448-445, 2006). Cependant, ces lasers ne présentent pas les caractéristiques permettant leur utilisation efficace pour un lidar à absorption différentielle, en particulier dans le proche infrarouge.

Ainsi, certains de ces lasers ne permettent pas la mise en œuvre de l'énergie nécessaire pour obtenir un signal lidar atmosphérique exploitable sur une distance de quelques kilomètres. D'autres lasers, comme par exemple celui décrit dans l'article « Coherent 2µm differential absorption and wind lidar with conductively cooled laser and two-axis scanning device » (Ishii & al., Applied Optics, 49, 1808-1817, 2010) utilisent une méthode de déclenchement connue sous le nom « *ramp and fire* ». Cette méthode ne permet pas d'assurer un rythme régulier d'émission des impulsions quand la fréquence de répétition est importante, ce qui engendre une variabilité de l'énergie des impulsions. Ils n'offrent donc qu'une faible fréquence de répétition, limitant le nombre de tirs laser sous le seuil nécessaire à une bonne précision des mesures. D'autres lasers produisent des impulsions de mauvaise qualité spectrale et spatiale, ou ne présentent qu'une faible efficacité électro-optique comme le système décrit dans l'article « Efficient high-power Ho :YAG laser directly in-band pumped by a GaSb-based laser diode stack at 1.9 µm » (Lamrini et al., Appl. Phys. B, 106, 315-319, 2012).

"Injection-seeded pulsed Ti:sapphire laser with novel stabilization scheme and capability of dual-wavelength operation" (K. Ertel et al, Applied Optics, vol. 44, no. 24, 20 août 2005, page 5120), décrit un émetteur laser à impulsions, apte à être mis en oeuvre dans un lidar à absorption différentielle, selon le préambule de la revendication 1.

### 3. Objectifs de l'invention

L'invention a pour objectif de pallier ces inconvénients de l'art antérieur.

L'invention a ainsi pour objectif de fournir un émetteur laser à impulsions, pouvant émettre des impulsions à plusieurs longueurs d'onde, apte à être mis en œuvre efficacement dans un lidar à absorption différentielle.

En particulier, un objectif de l'invention est d'obtenir un tel émetteur laser qui soit monomode pour chacune de ses longueurs d'onde.

Un autre objectif de l'invention est d'obtenir un tel émetteur laser qui présente une fréquence de répétition des impulsions variable en fonction des besoins, et une énergie des impulsions stable, même à une grande fréquence de répétition. Un objectif particulier est ainsi de pouvoir augmenter la fréquence de répétition d'un tel laser, en obtenant des impulsions de bonne qualité.

Un objectif particulier, selon au moins certains des modes de réalisation de l'invention, est d'obtenir un tel émetteur laser qui émette des impulsions d'énergie suffisante pour effectuer des mesures atmosphériques sur une distance de plusieurs kilomètres, par exemple supérieure au millijoule.

Un autre objectif de l'invention est d'obtenir un tel émetteur laser permettant une grande stabilité et précisions spectrales des impulsions émises.

Encore un autre objectif de l'invention est d'obtenir un tel émetteur laser qui présente un haut rendement électro-optique et une bonne efficacité énergétique.

Un autre objectif de l'invention est d'obtenir un tel émetteur laser qui soit relativement simple à fabriquer, fiable, robuste, relativement peu coûteux et efficace.

Un objectif particulier de l'invention, selon certains de ses modes de réalisation, est d'obtenir un tel émetteur laser qui émette des impulsions dans le domaine du proche infrarouge, autour de 1.6 ou 2 *µ*m.

Un autre objectif particulier de l'invention, selon certains de ses modes de réalisation, est d'obtenir un lidar à absorption différentiel permettant de mesurer efficacement la concentration des composants de l'atmosphère, et en particulier la concentration de CO₂ et/ou de H₂O et/ou du CH₄ atmosphérique.

### 4. Exposé de l'invention

Ces objectifs, ainsi que d'autres qui apparaîtront plus clairement par la suite, sont atteints à l'aide d'un émetteur laser à impulsions, apte à être mis en œuvre dans un lidar à absorption différentielle, comprenant une cavité laser et au moins deux lasers maîtres, les au moins deux lasers injectant séquentiellement des faisceaux laser maîtres dans ladite cavité laser, ladite cavité laser offrant une pluralité de modes propres résonnants, espacées spectralement par des Intervalles Spectraux Libres. Selon l'invention, les au moins deux lasers injectent séquentiellement, dans ladite cavité laser, des faisceaux laser maîtres dont les longueurs d'onde sont espacées spectralement d'un nombre entier d'Intervalles Spectraux Libres de ladite cavité, et, pour chaque faisceau laser maître injecté séquentiellement par un desdits au moins deux lasers maîtres, ledit émetteur laser comprend des premiers moyens d'asservissement de la longueur de ladite cavité laser, aptes à modifier ladite longueur de ladite cavité laser jusqu'à faire correspondre la longueur d'onde d'un desdits modes propres résonnants de ladite cavité laser avec la longueur d'onde dudit faisceau laser maître injecté dans la cavité.

Les lasers maîtres étant espacés spectralement d'un nombre entier d'Intervalles Spectraux Libres (ISL), ils peuvent être tous positionnés spectralement sur des modes propres résonnants de la cavité laser. La cavité laser peut donc émettre des impulsions monomode quand elle est ensemencée par l'un de ces lasers maître, sans qu'il soit nécessaire d'adapter ses caractéristiques à chaque laser maître.

L'asservissement de la longueur de la cavité à la longueur d'onde du faisceau laser maître injecté permet d'éviter un décalage entre les longueurs d'onde des lasers maître et les longueurs d'onde des modes propres résonnants de la cavité. Cet asservissement peut éventuellement corriger des décalages différents pour les différents lasers maîtres, si l'écartement spectral entre eux n'est pas parfaitement d'un nombre entier d'ISL. Cependant, une telle correction ne concernerait qu'un décalage spectral minime (par exemple de l'ordre de quelques MHz alors que l'ISL est de plusieurs centaines de MHz). En conséquence, les corrections à apporter sont très faibles et peuvent être apportées très rapidement.

L'émetteur laser à impulsion selon l'invention permet donc un taux de répétition des impulsions très important, avec une très bonne qualité spectrale et spatiale des impulsions émises. En particulier, cet émetteur laser est monomode pour chacune de ses longueurs d'onde. Il présente une fréquence de répétition des impulsions variable en fonction des besoins, et une énergie des impulsions stable, même à une grande fréquence de répétition. On obtient donc une grande stabilité et précisions spectrales des impulsions émises.

Par ailleurs, cet émetteur laser présente une bonne efficacité énergétique, est relativement simple à fabriquer, fiable, robuste, relativement peu coûteux et efficace.

Avantageusement lesdits premiers moyens d'asservissement comprennent :
- des moyens de mesure de l'écart entre la longueur d'onde d'un mode propre résonnant de ladite cavité laser et la longueur d'ondes dudit faisceau laser maître injecté dans la cavité,
- des moyens de calcul de la commande appropriée pour réduire cet écart, appliquée à un actionneur agissant sur la longueur de ladite cavité laser.

Un tel asservissement peut être mis en œuvre avec une méthode du type « Pound-Drever-Hall », telle que décrite ci-après.

De préférence, ledit actionneur est constitué par un module piézo-électrique apte à déplacer un miroir de ladite cavité laser.

Avantageusement, l'émetteur laser à impulsions comprend des seconds moyens d'asservissement de la longueur d'onde d'un premier desdits lasers maîtres, comprenant :
- des moyens de mesure de l'écart entre la longueur d'onde dudit premier laser maître et la longueur d'ondes fixe d'un module de référence fréquentiel,
- des moyens de calcul de la différence de valeur entre ledit écart et une valeur constante prédéterminée de décalage spectral,
- des moyens de calcul de la commande appropriée pour réduire ladite différence de valeur, appliquée à un actionneur agissant sur la longueur d'onde dudit premier laser maître.

Un tel asservissement peut être mis en œuvre avec une méthode du type « Offset Locking », telle que décrite ci-après.

De préférence, l'émetteur laser à impulsions comprend des troisièmes moyens d'asservissement de la longueur d'onde d'un second desdits lasers maîtres.

Ces moyens d'asservissement permettent de maintenir efficacement le second laser maître à une distance spectrale du premier laser maître qui est égale à un nombre entier d'ISL.

Bien évidemment, si d'autres lasers maîtres sont prévus, ils peuvent également être asservis pour rester à une distance spectrale du premier laser maître qui est égale à un nombre entier d'ISL.

Selon un mode de réalisation possible de l'invention, ces troisièmes moyens d'asservissement comprennent :
- des moyens de mesure de l'écart entre la longueur d'onde dudit second laser maître et la longueur d'ondes fixe d'un module de référence fréquentiel,
- des moyens de calcul de la différence de valeur entre ledit écart et une valeur constante prédéterminée de décalage spectral,
- des moyens de calcul de la commande appropriée pour réduire ladite différence de valeur, appliquée à un actionneur agissant sur la longueur d'onde dudit second laser maître.

Ce mode de réalisation, qui peut être mis en œuvre avec une méthode du type « Offset Locking », telle que décrite ci-après, est efficace quand la position spectrale du second laser maître pour que sa distance spectrale du premier laser maître soit égale à un nombre entier d'ISL a été préalablement déterminée.

Selon un autre mode de réalisation possible de l'invention, ces troisièmes moyens d'asservissement comprennent :
- des moyens de mesure de l'écart entre la longueur d'onde d'un mode propre résonnant de ladite cavité laser et la longueur d'ondes dudit second laser maître,
- des moyens de calcul de la commande appropriée pour réduire cet écart, appliquée à un actionneur agissant sur la longueur d'onde dudit second laser maître.

Ce mode de réalisation peut être mis en œuvre avec une méthode du type « Pound-Drever-Hall », telle que décrite ci-après. Dans ce cas, il est possible d'utiliser le signal d'erreur utilisé par les premiers moyens d'asservissement pour l'asservissement de la cavité, mais en appliquant une phase différente, appropriée à cette autre boucle d'asservissement constituant les troisièmes moyens d'asservissement.

Avantageusement, le module de référence fréquentiel met en œuvre un laser positionné spectralement sur une raie d'absorption d'un gaz.

Si le laser est utilisé pour la détection d'un gaz, dans un lidar, la raie d'absorption peut avantageusement correspondre au gaz à détecter.

Avantageusement, l'émetteur laser à impulsions met en œuvre des moyens de mesure de l'écart entre les longueurs d'onde de deux lasers comprenant des moyens de comparaison d'un générateur radiofréquence avec un battement optique cohérent entre lesdits deux lasers.

Selon un mode de réalisation avantageux, l'émetteur laser à impulsions comprend, dans ladite cavité laser, un milieu amplificateur composé par un cristal dopé à l'Holmium pompé par un laser fibré dopé au Thulium.

Un tel émetteur laser (association Thulium - Holmium) peut émettre des impulsions dans le domaine du proche infrarouge, autour de 2 µm. Plus précisément, il peut être utilisé pour la détection de gaz tels que le CO₂ ou H₂O qui présentent des raies d'absorption dans le domaine spectral des cristaux dopés Holmium (environ 2040-2100 nm).

Selon un autre mode de réalisation avantageux, l'émetteur laser à impulsions comprend, dans ladite cavité laser, un milieu amplificateur composé par un cristal dopé à l'Erbium pompé par un laser fibré dopé à l'Erbium.

Un tel émetteur laser (association Erbium - Erbium) peut émettre des impulsions dans le domaine du proche infrarouge, autour de 1.6 µm. Plus précisément, il peut être utilisé pour la détection de gaz tels que le CO₂ ou le CH₄ qui présentent des raies d'absorption dans le domaine spectral des cristaux dopés Erbium (environ 1500-1700 nm).

La présente invention concerne également un Lidar à absorption différentiel, caractérisé en ce qu'il met en œuvre un émetteur laser à impulsions tel que décrit ci dessus.

Un tel lidar à absorption différentiel permet de mesurer efficacement la concentration des composants de l'atmosphère, et en particulier la concentration de CO₂ et/ou de H₂O et/ou du CH₄ atmosphérique.

### 5. Liste des figures

L'invention sera mieux comprise à la lecture de la description suivante de modes de réalisation préférentiels, donnée à titre illustratif et non limitatif, et accompagnée de figures parmi lesquelles :
- la figure 1 est une représentation schématique d'un émetteur d'impulsions lasers selon un mode de réalisation de l'invention ;
- la figure 2 est un graphe représentant les modes propres résonnants longitudinaux d'une cavité laser ;
- les figures 3A et 3B sont des représentations schématiques du positionnement spectral et de l'asservissement des différents injecteurs de l'émetteur laser de la figure 1, selon un premier mode de réalisation de l'invention ;
- les figures 4A et 4B sont des représentations schématiques du positionnement spectral et de l'asservissement des différents injecteurs de l'émetteur laser de la figure 1, selon un deuxième mode de réalisation de l'invention ;
- la figure 5 est un graphe montrant le positionnement spectral des impulsions lasers pour une application DiAL de détection du CO₂ et de H₂O ;
- la figure 6 est une représentation schématique des composants d'un lidar mettant en œuvre l'émetteur laser de la figure 1.

### 6. Description détaillée de modes de réalisation de l'invention

### 6.1. Emetteur laser

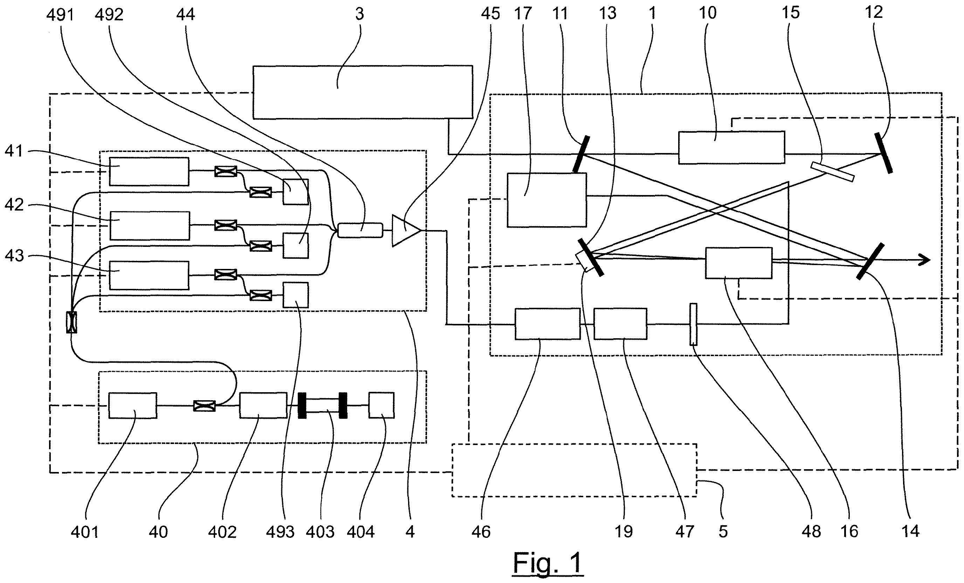

La figure 1 est une représentation schématique d'un émetteur d'impulsions lasers selon un mode de réalisation de l'invention, pouvant être mis en œuvre dans un lidar à absorption différentielle. Cet émetteur laser est une solution hybride associant un laser fibré et un laser solide, visant à obtenir l'émission d'impulsions lasers présentant une longueur d'onde proche de 2 *µ*m.

Comme le représente la figure 1, cet émetteur laser comprend principalement une cavité laser 1 en anneau comprenant un cristal amplificateur 10, un laser de pompage 3 du cristal amplificateur 10 et un système d'injection 4 de la cavité laser 1.

Différents composants de l'émetteur laser sont contrôlés par un équipement électronique de contrôle 5.

### Laser de pompage

Le laser de pompage 3 fournit l'énergie permettant l'inversion de population dans le cristal amplificateur 10. Ce laser de pompage est un laser fibré continu, dopé au Thulium et polarisé dans le cas d'un pompage d'un cristal dopé à l'Holmium ou un laser fibré continu dopé à l'Erbium dans le cas d'un pompage d'un cristal dopé à l'Erbium. Un tel laser émet dans la bande comprise entre 1,9 et 2,1 µm (Thulium) ou dans la bande 1,5 et 1,6 µm (Erbium). Il présente une bonne qualité spatiale de faisceau, une faible largeur spectrale (inférieure à 0,5 nm), est robuste et présente une bonne efficacité électro-optique (généralement comprise entre 10 et 20 %).

### Cristal amplificateur

Le cristal amplificateur 10, qui permet de convertir la longueur d'onde de la lumière fournie par le laser de pompage, peut par exemple être un cristal dopé à l'Holmium ou un cristal dopé à l'Erbium.

Dans le cas de l'association d'un laser fibré dopé au Thulium et d'un cristal dopé à l'Holmium, ce cristal 10 présente une bande d'absorption autour de 1,9 *µ*m et une bande d'émission laser autour de 2 *µ*m. Plusieurs matrices hôtes des cristaux dopés à l'Holmium peuvent être utilisés, parmi lesquels des matrices de type YLF (acronyme de l'anglais « Yttrium Lithium Fluoride » signifiant « fluorure d'yttrium-lithium »), ou De tels cristaux offrent une bande d'émission laser autour de 2051 nm.

Dans le cas d'une association laser fibré dopé à l'Erbium et d'un cristal dopé à l'Erbium, ce cristal 10 présente une bande d'absorption autour de 1.5 µm et une bande d'émission laser autour de 1.65 µm. Plusieurs matrices hôtes peuvent être là aussi utilisées parmi lesquelles une matrice YAG (acronyme de l'anglais « Yttrium Aluminium Garnet » signifiant « Grenat d'yttrium et d'aluminium ») ou LuAG (acronyme de l'anglais « Lutetium Aluminium Garnet » signifiant « Grenat de lutécium et d'aluminium »).

La proximité spectrale entre la bande d'absorption et la bande d'émission permet une bonne efficacité quantique et une faible charge thermique de ce cristal amplificateur 10. La plupart de ces cristaux sont biréfringents et ont des sections efficaces d'absorption et d'émission qui dépendent de la polarisation. Il est donc important que de tels cristaux soient pompés avec un laser de pompe polarisé et qu'ils soient associés, dans la cavité laser, avec un élément polarisant, pour optimiser l'efficacité électro-optique du système. Dans le mode de réalisation représenté par les figures, le cristal amplificateur 10 est formé par un barreau de 8 cm de long de Ho : YLF.

### 6.2 La cavité laser

### Éléments de la cavité laser

La figure 1 montre les différents éléments de la cavité laser 1. Cette cavité laser est constituée par quatre miroirs 11, 12, 13 et 14 imposant à la lumière un trajet en boucle, et formant ainsi une cavité résonnante en anneau. Le cristal amplificateur 10 est placé dans cette cavité, sur le trajet de la lumière, et est associé à un élément polarisant 15.

Les optiques qui sont placés sur le trajet du faisceau laser de pompe (lentilles, miroirs) sont en quartz optique de haute qualité, tel que celui commercialisé sous l'appellation « Infrasil » (marque déposée), pour limiter l'absorption du faisceau laser de pompe et sa possible déflection aléatoire à haute puissance.

Les miroirs 11 et 12 sont des miroirs dichroïques plans transmettant le faisceau laser de pompe pénétrant dans la cavité et réfléchissant le faisceau laser amplifié intra-cavité. Les miroirs 13 et 14 sont des miroirs concaves ayant un rayon de courbure d'un mètre. Le miroir 14 est un coupleur, ou miroir de couplage permettant l'émission de l'impulsion laser hors de la cavité, dont le taux de transmission est choisi pour favoriser le domaine spectral d'étude. A titre d'exemple, pour une longueur d'onde à 2051 nm, le taux de transmission peut avantageusement être choisi supérieur à 50%.

La longueur de la cavité laser est approximativement d'un mètre. Cette cavité laser est en espace libre, c'est-à-dire que le faisceau laser n'est pas fibré et s'y propage à l'air libre. La cavité laser 1 en espace libre est relativement compacte, de l'ordre de 200 mm * 200 mm.

### Déclenchement de la cavité laser

Pour produire des impulsions lasers de forte puissance, la cavité laser comprend un modulateur acousto-optique 16 placé sur le trajet du faisceau intra-cavité, et agissant comme un déclencheur. Cette utilisation d'un module acousto-optique comme déclencheur est bien connue de l'homme du métier, sous le nom de « technique de formation de grandes impulsions », encore appelée "commutation-Q". Ce modulateur acousto-optique 16 permet donc le déclenchement de l'émission d'une impulsion lumineuse par la cavité laser 1, en fonction d'une commande de l'équipement électronique de contrôle 5. La cavité laser 1 permet ainsi d'obtenir une source laser délivrant des impulsions d'énergie et de fréquence de répétition variable, adaptées aux applications souhaitées.

### Modes propres résonnants de la cavité laser

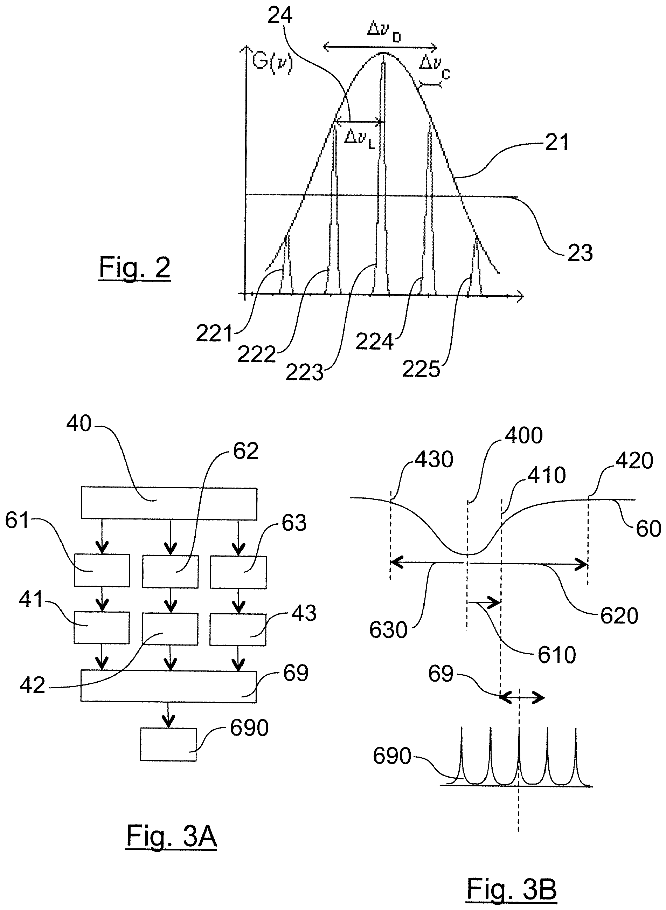

Les caractéristiques d'amplification d'une cavité optique d'un laser sont représentées par le graphique d'amplification de la figure 2. Dans ce graphique, la courbe 21, qui est sensiblement gaussienne, représente le gain en puissance apportée par le matériau amplificateur laser, en fonction de la fréquence de l'impulsion lumineuse amplifiée.

L'impulsion effectuant plusieurs tours de la cavité suivant la même trajet, des interférences apparaissent La cavité laser agit donc comme un interféromètre dans lequel seules certaines longueurs d'onde, correspondant aux modes propres résonnants de la cavité laser, bénéficient d'interférences constructives permettant une amplification réelle de l'impulsion laser. Ainsi, sur la figure 2, les pics 221, 222, 223, 224 et 225 correspondent aux modes propres de la cavité laser, dans lesquels la cavité amplifie effectivement le faisceau laser. Parmi ces modes, les modes 222, 223, 224, qui présentent un gain supérieur au seuil représenté par la droite 23, sont considérés comme des modes oscillants effectivement, ou modes propres résonnants. Il est à noter que l'écart de fréquences entre deux modes propres de la cavité laser, représenté par la flèche 24 et appelé Intervalle Spectral Libre (ISL), est constant entre tous les modes propres.

Les impulsions lasers émises par un Lidar en absorption différentielle doivent présenter une fréquence, ou une longueur d'onde, très précise. Il est en conséquence important que chacune de ces impulsions soit monomode, c'est-à-dire qu'elle soit amplifiée par un seul des modes propres résonnants de la cavité laser. Une telle impulsion présente ainsi une très bonne finesse spectrale, qui correspond à la finesse spectrale du mode propre résonnant.

Dans l'émetteur laser représenté sur la figure 1, un détecteur de résonnance 17 est associé à la cavité laser 1 pour repérer les pics de résonance de l'injecteur et détecter en temps réel si la cavité laser fonctionne sur un de ses modes propres résonnants.

### 6.3. Injection de la cavité laser

### Principe de l'injection

Selon l'invention, la cavité laser 1 est injectée, c'est à dire qu'un faisceau laser de relativement faible puissance, provenant d'un laser maître ou injecteur, est introduit sur le trajet optique de la cavité de laser 1 afin d'ensemencer celle-ci. La cavité optique 1 résonnante pour la longueur d'onde du faisceau maître délivre alors des impulsions de même longueur d'onde.

Dans le mode de réalisation représenté par la figure 1, le faisceau maître est émis par le système d'injection 4. Avant d'être injecté dans la cavité laser, ce faisceau maître est amplifié par un amplificateur optique fibré 45. Sa polarisation est ajustée sur la polarisation linéaire intra-cavité à l'aide d'une lame demi-onde 48. Un isolateur 47 permet la protection du trajet d'injection, en évitant l'entrée dans ce trajet d'un faisceau amplifiée par la cavité optique 1. Un modulateur électro-optique 46 permet d'effectuer une modulation de fréquence du laser maître utilisé pour asservir la longueur de la cavité optique 1 suivant la méthode Pound Drever Hall exposée ci-après.

Le faisceau maître est injecté sur le trajet optique de la cavité laser 1 par l'intermédiaire du module acousto-optique 16, en utilisant le premier ordre de diffraction de ce module acousto-optique.

### Système d'injection comprenant plusieurs injecteurs

Selon l'invention, le système d'injection 4 met en œuvre une pluralité de lasers maîtres, ou injecteurs 41, 42 et 43. Dans le mode de réalisation représenté, chacun de ces injecteurs est constitué par un laser continu monomode, par exemple une diode laser amplifiée optiquement ou un laser fibré continu.

Le faisceau maître émit par le système d'injection 4 est constitué par les faisceaux laser de chacun des injecteurs 41, 42 et 43 qui sont transmis séquentiellement à l'aide d'un commutateur optique fibré 44. Ce commutateur optique fibré 44 transmet, à un instant donné, le faisceau provenant de l'un des injecteurs et bloque les faisceaux provenant des autres injecteurs. Il doit avoir une isolation des différentes voies de l'ordre de 40 dB pour que le faisceau maître émis par le système d'injection 4 présente la pureté spectrale recherchée, notamment pour les applications de lidar à absorption différentielle. Un tel commutateur optique fibré à haute cadence est notamment connu de la publication « Active Switch Coupler at 2050 nm dor Differential Absorption Lidar and Athmospheric gas Monitoring » (Pawela & Al., IEEE Photon. Technol. Lett. / vol.23, no.16, pp.1163-1165, 2011).

### 6.4. Asservissement des injecteurs

Le système d'injection 4 permet de produire un faisceau maître présentant, séquentiellement, différentes longueurs d'onde correspondant aux longueurs d'ondes des différents injecteurs. La cavité laser 1 peut ainsi émettre, séquentiellement, des impulsions de longueur d'onde différentes correspondant sensiblement aux longueurs d'onde des différents injecteurs, à condition que ces longueurs d'onde correspondent à des modes propres oscillants de la cavité laser 1.

Pour s'assurer que les injecteurs 41, 42 et 43 présentent des longueurs d'onde correspondant à des modes propres oscillants de la cavité 1, il est prévu selon l'invention d'asservir les différentes longueurs d'onde des injecteurs pour qu'elles soient séparées spectralement d'un nombre entier d'Intervalles Spectraux Libres (ISL) de la cavité laser, pour qu'au moins l'un des injecteurs soit asservi à un module de référence fréquentiel absolu, et pour qu'au moins un des injecteurs soit positionné spectralement sur un des modes propres oscillants de la cavité 1.

La séparation spectrale d'un nombre entier d'intervalle spectral libre permet que les longueurs d'onde différentes des différents injecteurs correspondent chacune à un mode propre d'amplification de la cavité laser 1. La résolution spectrale entre les différentes longueurs d'onde émises est donc limitée par l'Intervalle Spectral Libre, qui est l'incrément en fréquence minimal.

### Méthodes d'asservissement

Les asservissements spectraux des injecteurs 41, 42 et 43 peuvent se faire en utilisant deux méthodes principales connues de l'homme du métier.

Une première méthode, appelée méthode « Pound-Drever-Hall », est notamment décrite dans l'article « An introduction to Pound-Drever-Hall laser frequency stabilization » (Black, American Journal of Physics - January 2001 -- Volume 69, Issue 1, pp. 79). Cette méthode bien connue de l'homme du métier permet la stabilisation de la longueur d'onde d'un laser en l'asservissant, par exemple, sur une raie d'absorption ou sur un pic de résonnance d'une cavité.

Une seconde méthode, appelée ci-après méthode « Offset Locking » (de l'anglais signifiant « verrouillage du décalage »), est par exemple décrite dans l'article « Frequency stabilization of distributed-feedback laser diodes at 1572 nm for lidar measurements of atmospheric carbon dioxide » (Numata & al. Applied Optics, Vol. 50, Issue 7, pp. 1047-1056, 2011). Selon cette méthode, un signal d'erreur est généré en comparant un battement optique cohérent entre deux lasers et un générateur radiofréquence, ce qui permet d'imposer un décalage spectral constant entre les deux lasers.

### Module de référence fréquentielle

Pour avoir une référence spectrale absolue, permettant l'asservissement spectral des injecteurs 41 ,42 et 43, un module de référence fréquentielle 40 est inclus dans le système d'injection 4. Ce module de référence fréquentielle 40 utilise généralement une raie d'absorption d'un gaz dans le domaine spectral choisi, la position spectrale de cette raie étant connue et invariable.

Dans le mode de réalisation représenté, le système de référence spectrale 40 comprend par exemple une diode laser fibrée 401 asservie au centre de la raie R30 du CO₂ à 2050,967 nm par la méthode « Pound-Drever-Hall », un modulateur de phase fibré 402 (100 MHz), une cuve à absorption fibrée multi-passage remplie de CO₂ pur 403, un détecteur fibré amplifié 404 et un système électronique d'asservissement 404.

Les écarts en longueur d'onde entre le système de référence spectrale 40 et les injecteurs 41, 42 et 43 sont mesurés à l'aide de battement hétérodyne entre les injecteurs et le système de référence spectrale 40, collectés par des détecteurs, respectivement 491, 492 et 493, puis amplifiés électroniquement et comparés à des oscillateurs radiofréquence.

### 6.5. Fixation du premier injecteur

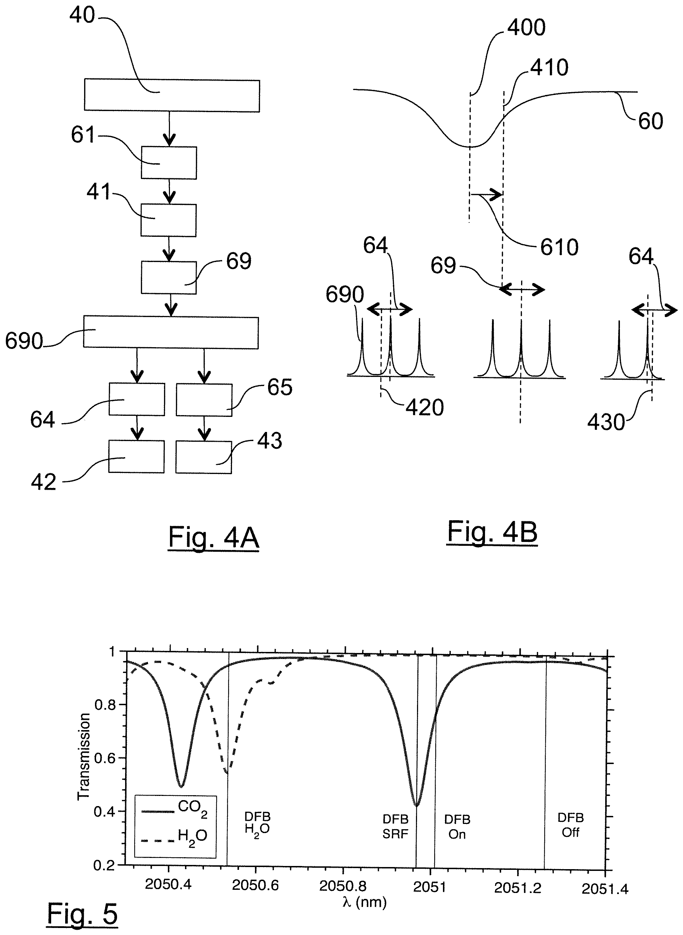

Le premier injecteur 41 est asservi par rapport au module de référence fréquentielle 40 en mettant en œuvre un asservissement 61 selon la «méthode d'Offset Locking » appliquant un décalage spectral 610 prédéterminé. Ainsi, comme le représentent les figures 3B et 4B, la longueur d'onde 410 de l'injecteur 41 est décalée par rapport à la longueur d'onde 400 du module de référence fréquentielle 40, du décalage spectral 610. Ce décalage spectral 610 est prédéterminé pour que l'injecteur 1 soit réglé précisément par rapport à la position spectrale d'une raie du spectre d'absorption 60 du gaz dont on veut mesurer la concentration. Il est donc indépendant de la position spectrale des modes propres de résonnance de la cavité laser 1.

### 6.6. Asservissement des injecteurs : premier mode de réalisation

### Initialisation

La procédure d'asservissement spectral des injecteurs 41, 42 et 43 selon un premier mode de réalisation de l'invention est représentée par les figures 3A et 3B. Ce premier mode de réalisation peut être mis en œuvre préférentiellement quand l'écartement entre les longueurs d'onde des différents injecteurs est dans le domaine radiofréquence, c'est à dire que l'écartement entre leurs fréquences est inférieur à quelques dizaines de GHz. Cette limite est imposée par la bande passante des détecteurs optiques disponibles sur le marché.

Lors d'une phase d'initialisation de l'émetteur laser, on ensemence séquentiellement la cavité laser avec les injecteurs 41, 42 et 43. Comme l'injecteur 41, les injecteurs 42 et 43 sont asservis par rapport au module de référence fréquentielle 40 en mettant en œuvre un asservissement, respectivement 62 et 63, selon la « méthode d'Offset Locking » appliquant un décalage spectral, respectivement 620 et 630.

Pour réaliser l'initialisation, on fait varier la longueur de la cavité laser 1. Pour cela, un module piézo-électrique 19 placé derrière le miroir 13 de la cavité laser 1 permet de faire varier la position de ce miroir 13. Le positionnement spectral 690 des modes propres résonnants de la cavité laser 1 se modifie alors. A l'aide du détecteur de résonnance 17, on peut détecter quand chaque faisceau maître, 41, 42, et 43, est résonnant dans la cavité laser. On peut alors modifier les décalages spectraux 620 et 630 des injecteurs 42 et 43, pour qu'ils soient résonnants pour la même longueur de cavité que l'injecteur 41. Les longueurs d'onde 420 et 430 des injecteurs 42 et 43 sont ainsi espacées de la longueur d'onde 410 de l'injecteur 41 d'un nombre entier d'Intervalles Spectraux Libres de la cavité laser 1.

### Fonctionnement

Une fois cette initialisation réalisée, la longueur de la cavité laser 1 est, selon l'invention, asservie à la longueur d'onde de l'injecteur ensemençant la cavité, avec un asservissement 69 agissant sur le module piézo-électrique 19. Le positionnement spectral 690 des modes propres résonnants de la cavité laser 1 est alors continuellement ajusté pour qu'un des modes propres corresponde à la longueur d'onde de l'injecteur. La longueur de la cavité laser est ainsi asservie successivement aux longueurs d'onde des injecteurs 41, 42 et 43. Cet asservissement 69 de la longueur de la cavité laser peut être fait par l'équipement électronique de contrôle 5, en utilisant la méthode « Pound-Drever-Hall » en fonction des mesures du détecteur de résonnance 17.

Comme les trois injecteurs 41, 42 et 43 ont préalablement été accordés de telle sorte que leurs longueurs d'onde soient espacées d'un nombre entier d'Intervalles Spectraux Libres, la longueur de la cavité laser est normalement quasiment identique pour ces trois injecteurs. L'asservissement 69 permet cependant d'assurer un ajustement fin de la position des modes propres résonnants sur longueur d'onde de chaque injecteur (ajustement de l'ordre de quelques MHz, alors qu'un Intervalle Spectral Libre représente plusieurs centaines de MHz).

### 6.7. Second mode de réalisation de la procédure d'asservissement

La procédure d'asservissement selon un second mode de réalisation de l'invention est représentée par les figures 4A et 4B. Ce second mode de réalisation peut être mis en œuvre préférentiellement quand l'écartement entre les longueurs d'onde des différents injecteurs est supérieur à quelques dizaines de GHz, c'est à dire lorsque aucun détecteur optique n'est capable de mesurer la fréquence du battement nécessaire à l'asservissement selon la « méthode d'Offset Locking ».

Comme dans le premier mode de réalisation, le premier injecteur 41 est asservi par rapport au module de référence fréquentielle 40 en mettant en œuvre un asservissement 61 selon la méthode « Offset Locking » appliquant un décalage spectral 610 prédéterminé. Pour que la longueur d'onde 410 de ce premier injecteur 41 corresponde à un mode propre résonnant de la cavité laser 1, la longueur de la cavité laser 1 est asservie à la longueur d'onde 410 de l'injecteur 41, en mettant en œuvre un asservissement 69 utilisant la méthode « Pound-Drever-Hall », qui agit sur le module piézo-électrique 19 en fonction des mesures du détecteur de résonnance 17 quand le faisceau maître ensemençant la cavité laser 1 provient de l'injecteur 41.

Les longueurs d'onde des injecteurs 42 et 43 sont initialement réglées avec un lambdamètre pour présenter un positionnement spectral permettant leur utilisation dans le lidar. Leur positionnement spectral précis est ensuite ajusté finement par des asservissements, respectivement 64 et 65. Ces asservissement sont mis en œuvre par l'équipement électronique de contrôle 5, en utilisant la méthode « Pound-Drever-Hall » en fonction des mesures du détecteur de résonnance 17 quand le faisceau maître amplifié dans la cavité laser 1 provient de l'injecteur 42 ou 43. Ils permettent ainsi directement d'ajuster les longueurs d'onde 420 et 430 des injecteurs 42 et 43 à des modes propres oscillants de la cavité laser 1.

Dans ce mode de réalisation, les trois injecteurs 41, 42 et 43 subissent des asservissements utilisant la méthode « Pound-Drever-Hall » et donc génèrent des signaux d'erreur de même type dans la cavité laser. Ces signaux peuvent cependant être distingués à condition que les phases de chacun de ces signaux soient différentes. Il est donc nécessaire que l'équipement électronique de contrôle 5 puisse permettre un réglage de phase différent pour les trois boucles d'asservissement.

Il est à noter que ce mode de réalisation de l'asservissement ne garantit pas le positionnement absolu de la longueur d'onde des injecteurs 42 et 43. En effet, cette méthode garantit seulement que la longueur d'onde de l'injecteur est résonante dans la cavité. La longueur d'onde précise de l'injecteur est alors fixée à un mode propre résonnant de la cavité proche de la longueur d'onde réglée avec un lambdamètre. Ce positionnement de la longueur d'onde à plus ou moins un Intervalle Spectral Libre de la longueur d'onde souhaité ne permet pas de fixer la longueur d'onde absorbée, qui doit être positionnée précisément sur une raie d'absorption. Elle permet cependant de fixer une longueur d'onde de référence, pour laquelle les spécifications pour le positionnement absolu de la longueur d'onde sont moins sévères.

### 6.8. Mise en œuvre dans un équipement lidar pour la mesure de CO₂ et H₂O

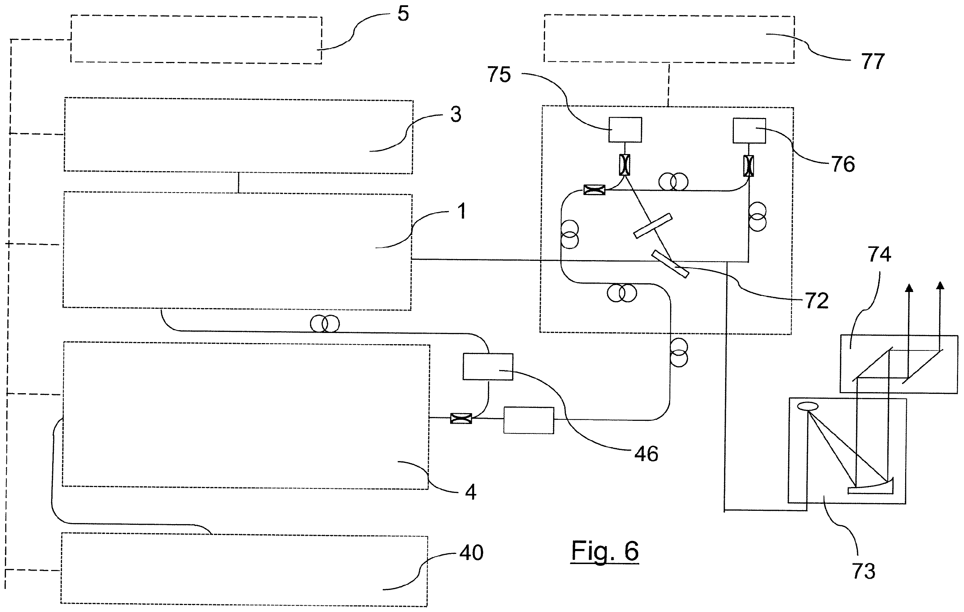

La figure 6 représente les composants d'un lidar à absorption différentielle comprenant l'émetteur laser décrit ci-dessus.

### Domaine spectral étudié

Les impulsions laser de ce lidar sont émises dans le domaine spectral autour 2 µm, qui offre des possibilités uniques pour le sondage du CO₂ et de H₂O dans l'atmosphère. Les courbes de transmission atmosphérique du CO₂ (380 ppm) et de H₂O (10 g/kg) pour un aller-retour dans une colonne atmosphérique de 1 km à partir du sol dans ce domaine spectral sont représentées sur la figure 5. Dans ce domaine spectral, la force des raies d'absorption est très importante, ce qui permet une épaisseur optique différentielle optimale pour une réduction d'erreur sur la mesure DIAL, sur des distances pouvant atteindre plusieurs kilomètres. Par ailleurs, ce domaine spectral permet d'éviter des interférences avec des raies d'absorption d'autres gaz de l'atmosphère, ne présente pas de problèmes de sécurité oculaire et ne présente qu'un faible bruit radiométrique (bruit de fond de ciel). Enfin, dans ce domaine spectral, les paramètres spectroscopiques du CO₂ ou de H₂O sont relativement peu sensibles à la température.

Dans ce mode de réalisation, les positions spectrales des injecteurs sont choisies autour de la raie d'absorption R30 à 2050.967 nm (4875.749 cm⁻¹) du CO₂ atmosphérique qui a pour caractéristique d'être relativement insensible vis à vis des fluctuations de température dans l'atmosphère. Un asservissement de la longueur d'onde 410 d'un injecteur 41 en flanc de raie permet de réduire l'absorption sur la ligne de visée et d'augmenter ainsi la distance de mesure de 3 à 10 km environ.

### Les composants du lidar

Les composants du lidar sont représentés schématiquement sur la figure 5. Il comporte notamment le système d'injection 4 utilisant le système de référence fréquentiel 40, le laser pulsé monomode bi-fréquence à 2 µm comprenant la cavité laser 1 et le laser de pompage 3 qui ont été décrits précédemment. Il comprend également un bloc de détection cohérente 7 , un télescope 73 et un système de visée 3D 74, un système 77 d'acquisition (conversion analogique-numérique), prétraitement en temps réel et visualisation, et le bloc de contrôle électronique 5 permettant de réaliser les asservissements, de contrôler les courants, et les températures, et d'assurer les synchronisations nécessaires.

### Le système d'injection

Deux injecteurs 41 et 42, constitués par des diodes laser de type « DFB » (de l'anglais « Distributed Feedback Laser diodes », signifiant « Diode laser à réaction distribuée »), asservies spectralement au système de référence spectrale 40 selon le premier mode de réalisation décrit ci dessus, sont utilisées dans le système d'injection 4. La longueur d'onde 400 du système de référence spectrale 40 correspond à la raie d'absorption R30 du CO₂, et la longueur d'onde 410 de l'injecteur 41 est positionnée sur le flanc de la raie, à environ 3 GHz du centre de la raie. La longueur d'onde 420 de l'injecteur 42 est positionnée en dehors de la raie d'absorption, à environ 19 GHz du centre de la raie. L'écart en fréquence entre les injecteurs 41 et 42 correspond à un nombre entier d'Intervalles Spectraux Libres (ISL) de la cavité laser suivant la méthode décrite ci dessus.

Les faisceaux émis par les injecteurs 41 et 42 sont séquentiellement amplifiés par l'amplificateur 45 puis injectés dans la cavité laser 1.

### Emission des impulsions lidar et réception du signal

Le faisceau laser pulsé émis par la cavité laser 1 passe à travers un polariseur 71, une lame quart-d'onde et est émis dans l'atmosphère via un télescope 73 de 10 cm de diamètre et un système de visée 3D 74. Le signal de rétrodiffusion atmosphérique utilise le même chemin retour, sauf au niveau du polariseur 71 où il est séparé du trajet de l'émission et envoyé sur une platine chargée d'effectuer le couplage dans une fibre.

Suivant le principe de la détection cohérente, le signal atmosphérique est mélangé optiquement avec une partie de la puissance laser des injecteurs, utilisés aussi comme oscillateur local. Une détection équilibrée 75 est utilisée pour le signal atmosphérique. Un autre détecteur 76 est utilisé pour collecter un battement hétérodyne de référence entre l'impulsion émise et l'oscillateur local. Un module 77 de traitement du signal et de visualisation permet d'exploiter le résultat de la mesure.

### 6.9. Avantages de la solution

La solution d'asservissement selon l'invention permet d'injecter la cavité laser pulsée avec des injecteurs positionnés spectralement sur des modes longitudinaux de la cavité de telle manière que le laser multifréquence se comporte de la même manière qu'un laser injecté monomode mono-fréquence. Cette solution garantie la stabilité de la longueur d'onde et de l'énergie de l'émetteur laser.

Cette solution présente de nombreux avantages, en particulier pour le domaine spectral proche de 2 µm. Ainsi, un seul émetteur laser permet une émission monomode multifréquence, et il est à la fois compact, robuste (faible sensibilité aux désalignements), et permet un fonctionnement à haute puissance (haute énergie par impulsion/ grand taux de répétition des impulsions). L'utilisation d'un pompage par laser CW - Tm fibré permet une grande robustesse, un taux de répétition des impulsions variable de 50 Hz à 50 kHz, et une bonne efficacité électro-optique. Une telle source laser modulable en terme d'énergie et de cadence de répétition des impulsions, notamment dans le domaine spectral du 2 µm, permet des applications lidar en utilisant au choix une détection directe ou hétérodyne

L'émetteur laser décrit ci dessus peut être utilisé préférentiellement pour mettre en œuvre un lidar de mesure du CO₂. Il est cependant possible de l'adapter pour la mesure d'autre gaz, par exemple le méthane dans le domaine spectral 1.65 µm en utilisant un cristal dopé à l'Erbium et pompé par un laser fibré Erbium. L'homme du métier pourra imaginer d'autres applications possibles d'un émetteur laser selon l'invention, nécessitant l'émission d'impulsions multifréquence à des longueurs d'onde précises, par exemple dans le domaine de l'imagerie médicale.

## Revendications

1. Émetteur laser à impulsions, apte à être mis en œuvre dans un lidar à absorption différentielle, comprenant une cavité laser (1) et au moins deux lasers maîtres (41, 42, 43), lesdits au moins deux lasers injectant séquentiellement des faisceaux laser maîtres dans ladite cavité laser, ladite cavité laser (1) offrant une pluralité de modes propres résonnants, espacées spectralement par des Intervalles Spectraux Libres, ledit émetteur étant adapté pour que lesdits au moins deux lasers injectent séquentiellement, dans ladite cavité laser, des faisceaux laser maîtres dont les longueurs d'onde sont espacées spectralement d'un nombre entier d'Intervalles Spectraux Libres de ladite cavité, **caractérisé en ce que**, pour chaque faisceau laser maître injecté séquentiellement par un desdits au moins deux lasers maîtres (41, 42, 43), ledit émetteur laser comprend des premiers moyens d'asservissement de la longueur de ladite cavité laser (1), aptes à modifier ladite longueur de ladite cavité laser (1), de sorte que la longueur d'onde d'un desdits modes propres résonnants de ladite cavité laser corresponde à la longueur d'onde dudit faisceau laser maître injecté dans la cavité.

2. Émetteur laser à impulsions selon la revendication 1, **caractérisé en ce que** lesdits premiers moyens d'asservissement comprennent :
- des moyens de mesure de l'écart entre la longueur d'onde d'un mode propre résonnant de ladite cavité laser (1) et la longueur d'onde dudit faisceau laser maître injecté dans la cavité,
- des moyens de calcul de la commande appropriée pour réduire cet écart, appliquée à un actionneur agissant sur la longueur de ladite cavité laser (1).

3. Émetteur laser à impulsions selon la revendication 2, **caractérisé en ce que** ledit actionneur est constitué par un module piézo-électrique (19) apte à déplacer un miroir (13) de ladite cavité laser (1).

4. Émetteur laser à impulsions selon l'une quelconque des revendications 1 à 3, **caractérisé en ce qu'**il comprend des seconds moyens d'asservissement de la longueur d'onde d'un premier desdits lasers maîtres (41), comprenant :
- des moyens de mesure de l'écart entre la longueur d'onde dudit premier laser maître (41) et la longueur d'onde fixe d'un module de référence fréquentiel (40),
- des moyens de calcul de la différence de valeur entre ledit écart et une valeur constante prédéterminée de décalage spectral,
- des moyens de calcul de la commande appropriée pour réduire ladite différence de valeur, appliquée à un actionneur agissant sur la longueur d'onde dudit premier laser maître (41).

5. Émetteur laser à impulsions selon l'une quelconque des revendications 1 à 4, **caractérisé en ce qu'**il comprend des troisièmes moyens d'asservissement de la longueur d'onde d'un second desdits lasers maîtres (42).

6. Émetteur laser à impulsions selon la revendication 5, **caractérisé en ce que** lesdits troisièmes moyens d'asservissement comprennent :
- des moyens de mesure de l'écart entre la longueur d'onde dudit second laser maître (42) et la longueur d'onde fixe d'un module de référence fréquentiel (40),
- des moyens de calcul de la différence de valeur entre ledit écart et une valeur constante prédéterminée de décalage spectral,
- des moyens de calcul de la commande appropriée pour réduire ladite différence de valeur, appliquée à un actionneur agissant sur la longueur d'onde dudit second laser maître (42).

7. Émetteur laser à impulsions selon la revendication 5, **caractérisé en ce que** lesdits troisièmes moyens d'asservissement comprennent :
- des moyens de mesure de l'écart entre la longueur d'onde d'un mode propre résonnant de ladite cavité laser (1) et la longueur d'onde dudit second laser maître (42),
- des moyens de calcul de la commande appropriée pour réduire cet écart, appliquée à un actionneur agissant sur la longueur d'onde dudit second laser maître (42). 8. Émetteur laser à impulsions selon l'une quelconque des revendications 4 et 6, **caractérisé en ce que** ledit module de référence fréquentiel (40) met en œuvre un laser positionné spectralement sur une raie d'absorption d'un gaz.

8. Emetteur laser à impulsions selon l'une quelconque des revendications 4 à 6, **caractérisé en ce que** ledit module de référence fréquentiel (40) met en œuvre un laser positionné spectralement sur une raie d'absorption d'un gaz.

9. Émetteur laser à impulsions selon l'une quelconque des revendications précédentes, **caractérisé en ce qu'**il met en œuvre des moyens de mesure de l'écart entre les longueurs d'onde de deux lasers comprenant des moyens de comparaison d'un générateur radiofréquence avec un battement optique cohérent entre lesdits deux lasers.

10. Émetteur laser à impulsions selon l'une quelconque des revendications précédentes, **caractérisé en ce qu'**il comprend, dans ladite cavité laser, un milieu amplificateur composé par un cristal dopé à l'Holmium pompé par un laser fibré dopé au Thulium.

11. Émetteur laser à impulsions selon l'une quelconque des revendications 1 à 9, **caractérisé en ce qu'**il comprend, dans ladite cavité laser, un milieu amplificateur composé par un cristal dopé à l'Erbium pompé par un laser fibré dopé à l'Erbium.

12. Équipement lidar à absorption différentielle, **caractérisé en ce qu'**il comprend un émetteur laser selon l'une quelconque des revendications précédentes.

## Patentansprüche

1. Gepulster Laseremitter, der imstande ist, in einem Differenzabsorptions-Lidar eingesetzt zu werden, umfassend einen Laserhohlraum (1) und mindestens zwei Hauptlaser (41, 42, 43), wobei die mindestens zwei Laser sequenziell Hauptlaserstrahlen in den Laserhohlraum einspeisen, wobei der Laserhohlraum (1) eine Vielzahl von resonanten Eigenmodi bietet, die durch freie Spektralbereiche spektral beabstandet sind, wobei der Emitter dazu angepasst ist, dass die mindestens zwei Laser sequenziell Hauptlaserstrahlen in den Laserhohlraum einspeisen, deren Wellenlängen um eine ganze Zahl von freien Spektralbereichen des Hohlraums spektral beabstandet sind, **dadurch gekennzeichnet, dass** der Emitter für jeden durch einen der mindestens zwei Hauptlaser (41, 42, 43) sequenziell eingespeisten Hauptlaserstrahl erste Mittel zum Ansteuern der Länge des Laserhohlraums (1) umfasst, die imstande sind, die Länge des Laserhohlraums (1) derart zu modifizieren, dass die Wellenlänge eines der resonanten Eigenmodi des Laserhohlraums der Wellenlänge des in den Hohlraum eingespeisten Hauptlaserstrahls entspricht.

2. Gepulster Laseremitter nach Anspruch 1, **dadurch gekennzeichnet, dass** die ersten Mittel zum Ansteuern umfassen:
- Mittel zum Messen des Abstands zwischen der Wellenlänge eines resonanten Eigenmodus des Laserhohlraums (1) und der Wellenlänge des in den Hohlraum eingespeisten Hauptlaserstrahls,
- Mittel zum Berechnen der geeigneten Regelung, um diesen Abstand zu reduzieren, die an einem Stellglied angewendet wird, das auf die Länge des Laserhohlraums (1) wirkt.

3. Gepulster Laseremitter nach Anspruch 2, **dadurch gekennzeichnet, dass** das Stellglied aus einem piezoelektrischen Modul (19) besteht, das imstande ist, einen Spiegel (13) des Laserhohlraums (1) zu versetzen.

4. Gepulster Laseremitter nach einem der Ansprüche 1 bis 3, **dadurch gekennzeichnet, dass** er zweite Mittel zum Ansteuern der Wellenlänge eines ersten der Hauptlaser (41) umfasst, umfassend:
- Mittel zum Messen des Abstands zwischen der Wellenlänge des ersten Hauptlasers (41) und der festen Wellenlänge eines Frequenzreferenzmoduls (40),
- Mittel zum Berechnen des Differenzwerts zwischen dem Abstand und einem vorbestimmten konstanten Wert spektraler Verschiebung,
- Mittel zum Berechnen der geeigneten Regelung, um den Differenzwert zu reduzieren, die an einem Stellglied angewendet wird, das auf die Wellenlänge des ersten Hauptlasers (41) wirkt.

5. Gepulster Laseremitter nach einem der Ansprüche 1 bis 4, **dadurch gekennzeichnet, dass** er dritte Mittel zum Ansteuern der Wellenlänge eines zweiten der Hauptlaser (42) umfasst.

6. Gepulster Laseremitter nach Anspruch 5, **dadurch gekennzeichnet, dass** die dritten Mittel zum Ansteuern umfassen:
- Mittel zum Messen des Abstands zwischen der Wellenlänge des zweiten Hauptlasers (42) und der festen Wellenlänge eines Frequenzreferenzmoduls (40),
- Mittel zum Berechnen des Differenzwerts zwischen dem Abstand und einem vorbestimmten konstanten Wert spektraler Verschiebung,
- Mittel zum Berechnen der geeigneten Regelung, um den Differenzwert zu reduzieren, die an einem Stellglied angewendet wird, das auf die Wellenlänge des zweiten Hauptlasers (42) wirkt.

7. Gepulster Laseremitter nach Anspruch 5, **dadurch gekennzeichnet, dass** die dritten Mittel zum Ansteuern umfassen:
- Mittel zum Messen des Abstands zwischen der Wellenlänge eines resonanten Eigenmodus des Laserhohlraums (1) und der Wellenlänge des zweiten Hauptlasers (42),
- Mittel zum Berechnen der geeigneten Regelung, um diesen Abstand zu reduzieren, die an einem Stellglied angewendet wird, das auf die Wellenlänge des zweiten Hauptlasers (42) wirkt. 8. Gepulster Laseremitter nach einem der Ansprüche 4 und 6, **dadurch gekennzeichnet, dass** das Frequenzreferenzmodul (40) einen Laser einsetzt, der spektral auf einer Gasabsorptionslinie positioniert ist.

8. Gepulster Laseremitter nach einem der Ansprüche 4 bis 6, **dadurch gekennzeichnet, dass** das Frequenzreferenzmodul (40) einen Laser einsetzt, der spektral auf einer Gasabsorptionslinie positioniert ist.

9. Gepulster Laseremitter nach einem der vorstehenden Ansprüche, **dadurch gekennzeichnet, dass** er Mittel zum Messen des Abstands zwischen den Wellenlängen von zwei Lasern einsetzt, umfassend Mittel zum Vergleichen eines Hochfrequenzgenerators mit einer zwischen den zwei Lasern kohärenten optischen Schwebung.

10. Gepulster Laseremitter nach einem der vorstehenden Ansprüche, **dadurch gekennzeichnet, dass** er im Laserhohlraum einen Umgebungsverstärker umfasst, der aus einem mit Holmium dotierten Kristall besteht, der von einem mit Thulium dotierten gebündelten Laser gepumpt wird.

11. Gepulster Laseremitter nach einem der Ansprüche 1 bis 9, **dadurch gekennzeichnet, dass** er im Laserhohlraum einen Umgebungsverstärker umfasst, der aus einem mit Erbium dotierten Kristall besteht, der von einem mit Erbium dotierten gebündelten Laser gepumpt wird.

12. Differenzabsorptions-Lidar-Ausstattung, **dadurch gekennzeichnet, dass** sie einen Laseremitter nach einem der vorstehenden Ansprüche umfasst.

## Claims

1. Pulsed laser emitter, capable of being implemented in a differential absorption lidar, comprising a laser cavity (1) and at least two master lasers (41, 42, 43), said at least two lasers sequentially injecting master laser beams into said laser cavity, said laser cavity (1) having a plurality of resonant eigenmodes that are spaced apart spectrally by Free Spectral Ranges, said emitter being adapted such that said at least two lasers sequentially inject, into said laser cavity, master laser beams of which the wavelengths are spectrally spaced apart by an integer number of Free Spectral Ranges of said cavity, **characterised in that**, for each master laser beam sequentially injected by one of said at least two master lasers (41, 42, 43), said laser emitter comprises first means for controlling the length of said laser cavity (1), capable of modifying said length of said laser cavity (1), such that the wavelength of one of said resonant eigenmodes of said laser cavity corresponds to the wavelength of said master laser beam injected into the cavity.

2. Pulsed laser emitter according to claim 1, **characterised in that** said first controlling means comprise:
- means for measuring the difference between the wavelength of a resonant eigenmode of said laser cavity (1) and the wavelength of said master laser beam injected into the cavity,
- means for calculating the appropriate command to reduce this difference, applied to an actuator acting on the length of said laser cavity (1).

3. Pulsed laser emitter according to claim 2, **characterised in that** said actuator is constituted by a piezoelectric module (19) capable of moving a mirror (13) of said laser cavity (1).

4. Pulsed laser emitter according to any one of claims 1 to 3, **characterised in that** it comprises second means for controlling the wavelength of a first of said master lasers (41), comprising:
- means for measuring the difference between the wavelength of said first master laser (41) and the fixed wavelength of a frequential reference module (40),
- means for calculating the difference in value between said difference and a predetermined constant spectral difference value,
- means for calculating the appropriate command to reduce said difference in value, applied to an actuator acting on the wavelength of said first master laser (41).

5. Pulsed laser emitter according to any one of claims 1 to 4, **characterised in that** it comprises third means for controlling the wavelength of a second of said master lasers (42).

6. Pulsed laser emitter according to claim 5, **characterised in that** said third controlling means comprise:
- means for measuring the difference between the wavelength of said second master laser (42) and the fixed wavelength of a frequential reference module (40),
- means for calculating the difference in value between said difference and a predetermined constant spectral difference value,
- means for calculating the appropriate command to reduce said difference in value, applied to an actuator acting on the wavelength of said second master laser (42).

7. Pulsed laser emitter according to claim 5, **characterised in that** said third controlling means comprise:
- means for measuring the difference between the wavelength of a resonant eigenmode of said laser cavity (1) and the wavelength of said second master laser (42),
- means for calculating the appropriate command to reduce this difference, applied to an actuator acting on the wavelength of said second master laser (42).

8. Pulsed laser emitter according to any one of claims 4 to 6, **characterised in that** said frequential reference module (40) implements a laser spectrally positioned on an absorption line of a gas.

9. Pulsed laser emitter according to any one of the preceding claims, **characterised in that** it implements means for measuring the difference between the wavelengths of two lasers comprising means for comparing a radiofrequency generator with a consistent optical beat between said two lasers.

10. Pulsed laser emitter according to any one of the preceding claims, **characterised in that** it comprises, in said laser cavity, an amplifier medium composed by a Holmium doped crystal pumped by a Thulium doped fibred laser.

11. Pulsed laser emitter according to any one of claims 1 to 9, **characterised in that** it comprises, in said laser cavity, an amplifier medium composed by an Erbium doped crystal pumped by an Erbium doped fibred laser.

12. Differential absorption lidar equipment, **characterised in that** it comprises a laser emitter according to any one of the preceding claims.
